# FASCICULE DE BREVET EUROPEEN

(11) **EP 4 364 323 B1**
(45) Date de publication et mention de la délivrance du brevet: **09.09.2026**
(21) Numéro de dépôt: 22741815.9
(22) Date de dépôt: 14.06.2022
(51) Int. Cl.: H04L 12/28, H04W 16/20, H04W 4/33, H04W 24/02, H04W 4/02, H04W 84/12

(54) **GESTION D'INSTALLATION D'UN ÉQUIPEMENT D'EXTENSION DE COUVERTURE RADIO ADDITIONNEL DANS UN RÉSEAU DE COMMUNICATION LOCAL COMPRENANT UNE PASSERELLE DOMESTIQUE ET AU MOINS UN PREMIER ÉQUIPEMENT D'EXTENSION DE COUVERTURE RADIO**
VERWALTUNG DER INSTALLATION EINER ZUSÄTZLICHEN DRAHTLOSEN ABDECKUNGSERWEITERUNGSVORRICHTUNG IN EINEM LOKALEN KOMMUNIKATIONSNETZ MIT EINEM HEIM-GATEWAY UND MINDESTENS EINER ERSTEN DRAHTLOSEN ABDECKUNGSERWEITERUNGSVORRICHTUNG
MANAGEMENT OF THE INSTALLATION OF AN ADDITIONAL WIRELESS COVERAGE EXTENSION DEVICE IN A LOCAL COMMUNICATION NETWORK COMPRISING A HOME GATEWAY AND AT LEAST ONE FIRST WIRELESS COVERAGE EXTENSION DEVICE

(30) Priorité: 29.06.2021 FR 2107010
(43) Date de publication de la demande: 08.05.2024
(73) Titulaire: Orange S.A., 92130 Issy-les-Moulineaux (FR)
(72) Inventeur: CARBONNEL, Louis, 92326 CHATILLON (FR); VINCENT, Yoann, 92326 CHATILLON (FR)
(74) Mandataire: Vidon Brevets & Stratégie
(86) Numéro de dépôt international: PCT/FR2022/051144
(87) Numéro de publication internationale: WO 2023/275451

(56) Documents cités:
- EP-A1- 3 435 731
- WO-A2-2017/106046
- US-A1- 2006 046 646

## Description

### Domaine technique

Le domaine de l'invention est celui des réseaux de communication locaux fonctionnant, en tout ou en partie, selon une technologie de communication radio, par exemple la technologie de communication sans fil Wi-Fi. Plus précisément, l'invention concerne l'identification d'une zone dans un environnement domestique adaptée pour installer un équipement destiné à communiquer selon une technologie radio avec un autre équipement de l'environnement domestique, par exemple une passerelle domestique.

### Art antérieur

Pour étendre la couverture Wi-Fi d'un réseau local domestique, il est connu d'installer un appareil domestique d'extension, aussi connu sous le nom de répéteur Wi-Fi (ou « Wi-Fi extender » en anglais), dans l'environnement domestique d'un utilisateur, par exemple son domicile. Un tel répéteur Wi-Fi assure un relais entre les équipements connectés placés dans l'environnement domestique de l'utilisateur et la passerelle domestique servant de point d'accès au réseau IP (pour « Internet Protocol » en anglais).

Un tel répéteur Wi-Fi est notamment utilisé lorsque certains emplacements du domicile ne sont pas couverts par le réseau local Wi-Fi de la passerelle domestique, par exemple parce que la passerelle domestique (en anglais « gateway ») est trop loin ou que des obstacles sont placés dans l'environnement domestique (murs trop épais, équipements parasitant le signal Wi-Fi).

Lorsqu'un utilisateur acquiert un répéteur Wi-Fi afin d'étendre la couverture Wi-Fi de sa passerelle domestique, un problème couramment rencontré est qu'il ne sait pas où placer ce répéteur Wi-Fi. Souvent, l'utilisateur, n'étant pas du domaine des télécommunications, a tendance à placer le répéteur Wi-Fi dans la zone non couverte par le réseau Wi-Fi de la passerelle domestique. Or, un tel emplacement ne permet pas de régler les problèmes de connexion et de services Wi-Fi qu'il rencontre dans ces zones puisque le répéteur Wi-Fi n'a pas accès à la passerelle domestique.

Un bon positionnement du répéteur Wi-Fi dans l'environnement domestique est nécessaire afin d'assurer une bonne qualité de service Wi-Fi à l'utilisateur.

Les mécanismes d'aide au positionnement actuels sont très sommaires. Par exemple, une LED d'information peut être disponible sur l'équipement répéteur Wi-Fi lui-même permettant d'indiquer si le répéteur Wi-Fi est correctement placé par rapport à la passerelle domestique. Cependant, une telle LED d'information ne fait qu'indiquer à l'utilisateur si le répéteur Wi-Fi peut se connecter ou non à la passerelle domestique. La LED ne lui indique pas si le répéteur Wi-Fi est placé de manière optimale par rapport à la passerelle domestique. Par exemple, des LEDs d'information peuvent être disponibles sur l'équipement répéteur Wi-Fi lui-même permettant d'indiquer si le répéteur Wi-Fi est correctement placé par rapport à la passerelle domestique, par exemple un certain nombre de LEDs allumé indique une certaine qualité de signal Wi-Fi. Cependant, de telles LEDs n'indiquent pas à l'utilisateur si le répéteur Wi-Fi est placé de manière optimale par rapport à la passerelle domestique. Par exemple, le répéteur Wi-Fi peut être placé dans une zone lui permettant de se connecter à la passerelle domestique, mais le répéteur Wi-Fi peut être placé dans une zone considérée comme trop près de la passerelle domestique car l'extension de couverture Wi-Fi correspondante n'est pas maximale, et un autre emplacement du répéteur Wi-Fi plus éloigné de la passerelle domestique pourrait être plus judicieux.

De plus, l'information par LEDs n'est fournie à l'utilisateur qu'une fois que le répéteur Wi-Fi a été branché et démarré. Si le répéteur Wi-Fi a été placé trop loin de la passerelle domestique, l'utilisateur doit éteindre et débrancher l'appareil et refaire l'installation à un autre emplacement. Ainsi, il n'est pas aisé pour un utilisateur de connaître l'emplacement optimal d'un répéteur Wi-Fi dans son environnement domestique.

Pour tenter de résoudre ce problème, le Demandeur a proposé un procédé d'identification d'une zone d'installation d'un équipement dans un environnement domestique d'un utilisateur, qui fait l'objet de la demande de brevet français FR 3 088 782. Un autre procédé semblable, de détermination de positionnement optimum d'un répéteur WiFi est connu du document WO 2017 / 106046 A2.

Cependant, si ce procédé répond à la problématique du positionnement d'un premier répéteur Wi-Fi dans un environnement domestique, il ne permet pas d'assister suffisamment un utilisateur qui souhaite installer plusieurs répéteurs Wi-Fi dans un réseau de communication local.

Il existe donc un besoin d'une technique qui ne présente pas ces différents inconvénients de l'art antérieur. Notamment, il existe un besoin d'une telle technique qui apporte une assistance pratique et efficace aux utilisateurs qui souhaitent installer plusieurs répéteurs Wi-Fi dans un même réseau de communication local, pour améliorer la zone de couverture radio de ce dernier.

### Exposé de l'invention

L'invention répond à ce besoin en proposant un procédé, mis en œuvre dans un réseau de communication local comprenant une passerelle domestique et au moins un premier équipement d'extension de couverture radio, de gestion d'installation d'un équipement d'extension de couverture radio additionnel. Un tel procédé de gestion d'installation est mis en œuvre par un terminal mobile apte à se déplacer dans le réseau de communication local. La passerelle domestique et ledit au moins un premier équipement d'extension de couverture radio forment points d'accès au réseau local. L'invention est définie dans les revendications indépendantes et des modes de réalisation avantageux sont définis dans les revendications dépendantes ci-dessous.

Selon un mode de réalisation de l'invention, ce procédé met en œuvre :
- une détermination d'une indication de positionnement du terminal mobile par rapport auxdits points d'accès au réseau local,
   l'indication de positionnement pouvant prendre une valeur choisie au sein d'un groupe de valeurs comprenant une indication de positionnement trop lointain, une indication de positionnement trop proche, et une indication de positionnement optimal ;
- une restitution d'une position adéquate d'installation de l'équipement d'extension de couverture radio additionnel, la position adéquate correspondant à une position courante du terminal mobile lorsqu'au moins une des indications de positionnement prend une valeur d'indication de positionnement optimal et qu'aucune des indications de positionnement ne prend une valeur d'indication de positionnement trop proche.

Ainsi, l'invention repose sur une approche tout à fait nouvelle et inventive de l'aide à l'installation d'équipements d'extension de couverture radio, dans un environnement domestique comprenant déjà au moins un tel équipement d'extension.

En effet, un mode de réalisation de l'invention repose sur une application dédiée, installée sur le terminal mobile d'un utilisateur, par exemple un téléphone intelligent de type smartphone. Lorsque l'utilisateur se déplace au sein de son environnement domestique avec son terminal mobile en main, l'application évalue en temps réel la pertinence de l'endroit où il se trouve pour brancher l'équipement additionnel d'extension de couverture radio, en déterminant une indication de positionnement trop proche, optimal, ou trop lointain par rapport à chacun des points d'accès au réseau de communication local.

En outre, dès que l'utilisateur est à une distance optimale d'au moins un des points d'accès au réseau, et qu'il n'est trop près d'aucun point d'accès, l'application indique à l'utilisateur qu'il se trouve à une position adéquate pour installer son nouvel équipement d'extension de couverture radio. Cette restitution peut se faire par le biais de l'affichage d'un message sur l'écran du terminal mobile, par la restitution d'un message audio, ou encore par l'émission d'un signal sonore dédié.

Il est ainsi très facile pour l'utilisateur de trouver une position adéquate d'installation d'un nouvel équipement d'extension de couverture radio, quel que soit son environnement domestique, et quel que soit le nombre d'équipements d'extension de couverture radio déjà présents dans le réseau de communication local.

Selon un mode de réalisation, tant que la position adéquate d'installation n'est pas restituée, un tel procédé met en œuvre une restitution des indications de positionnement prenant une valeur d'indication de positionnement trop lointain et/ou une valeur d'indication de positionnement trop proche.

Ainsi, en fonction d'un nom donné par l'utilisateur à chaque point d'accès au réseau (par exemple au cours d'une phase préliminaire à l'installation du nouvel équipement d'extension), l'application peut indiquer à l'utilisateur, par un message affiché sur l'écran du terminal mobile, ou par un message audio, qu'il se trouve trop près ou trop loin de l'un ou l'autre des points d'accès. Par exemple, un message du type « vous êtes trop loin de la passerelle domestique » et/ou un message du type « vous êtes trop près du répéteur du bureau » s'affiche sur l'écran du smartphone. L'utilisateur peut ainsi facilement utiliser ces indications pour se déplacer dans son environnement domestique, en se rapprochant de la passerelle et/ou en s'éloignant du répéteur du bureau, jusqu'à ce que l'application lui indique qu'il se trouve désormais à une position adéquate d'installation.

Selon un mode de réalisation, la détermination d'une indication de positionnement du terminal mobile par rapport à un des points d'accès comprend au moins une mesure d'un niveau instantané de signal radio échangé entre le terminal mobile et le point d'accès.

En effet, le terminal mobile communique selon une technologie de communication radio avec chacun des points d'accès du réseau de communication local. Selon une première variante, chaque point d'accès évalue le niveau de signal radio émis par le terminal mobile : plus ce niveau est faible, et plus la distance séparant le terminal mobile du point d'accès est élevée. Il est ainsi possible d'en déduire une indication de positionnement trop proche, trop lointain ou optimal du terminal mobile par rapport au point d'accès. Selon une deuxième variante, c'est le terminal mobile qui évalue le niveau de signal radio qu'il reçoit de chacun des points d'accès du réseau, pour en déduire une indication de positionnement trop proche, trop lointain ou optimal. Dans la première variante, la passerelle domestique peut centraliser les informations reçues des différents points d'accès et les transmettre au terminal mobile.

Selon un mode de réalisation, le terminal mobile communiquant avec les points d'accès selon une technologie de communication sans fil Wi-Fi, la mesure d'un niveau instantané de signal radio comprend une mesure, par le point d'accès, du niveau de puissance en réception du signal Wi-Fi (RSSI pour l'anglais « Received Signal Strength Indication ») émis par le terminal mobile.

On se place ainsi dans le cadre de la première variante évoquée ci-avant. On utilise avantageusement une mesure de RSSI, qui est un bon indicateur de la distance du terminal mobile au point d'accès.

Cependant, le RSSI est, par nature, une information subissant en permanence des variations, car elle est influencée par exemple par la manière dont l'utilisateur tient son smartphone, ou par la position de l'utilisateur par rapport à son smartphone et aux autres points d'accès, ou encore par le masquage du point d'accès Wi-Fi par un obstacle (par exemple le corps d'un utilisateur qui passe sur le trajet entre le terminal mobile et le point d'accès).

En conséquence, selon un mode de réalisation, la détermination d'une indication de positionnement du terminal mobile par rapport à un des points d'accès comprend également un calcul d'une valeur moyenne de mesures, par le point d'accès, du niveau de puissance en réception du signal Wi-Fi émis par le terminal mobile, sur une fenêtre de temps de durée déterminée.

Ainsi, au lieu d'utiliser la valeur instantanée du RSSI pour déterminer la valeur de l'indication de positionnement du terminal mobile par rapport au point d'accès, on utilise la moyenne des dernières valeurs de RSSI, sur une fenêtre temporelle donnée : par exemple, pour un RSSI mesuré toutes les demi-secondes, on calcule une moyenne sur quatre échantillons, afin de prendre en compte la valeur moyenne du RSSI sur une fenêtre temporelle de deux secondes. On évite ainsi avantageusement des oscillations néfastes des valeurs des indications de positionnement, qui pourraient perturber la compréhension de l'utilisateur quand il se trouve à proximité d'une frontière entre une zone de positionnement trop proche et une zone de positionnement optimal par exemple. En effet, compte tenu des facteurs environnementaux influençant la valeur du RSSI, sans ce calcul de valeur moyenne, il serait possible, même en absence de tout déplacement de l'utilisateur et de son terminal mobile, que l'application d'aide au positionnement change, par exemple toutes les deux ou trois secondes, les valeurs des indications de positionnement par rapport aux différents points d'accès, de trop proche à optimal par exemple, et inversement. Ceci pourrait générer des indications déconcertantes pour l'utilisateur, et nuirait au bon positionnement du nouvel équipement d'extension de couverture radio.

En effet, selon un mode de réalisation, un changement de valeur de l'indication de positionnement se produit lorsque le niveau de signal radio mesuré franchit un seuil de niveau de signal radio déterminé. On peut ainsi déterminer plusieurs seuils, correspondant à une frontière entre une zone de positionnement trop proche et une zone de positionnement optimal d'une part, et à une frontière entre une zone de positionnement optimal et une zone de positionnement trop lointain d'autre part.

Cependant, selon un mode de réalisation avantageux, on met en place un mécanisme d'hystérésis qui, couplé au moyennage des valeurs de RSSI, permet d'éviter l'oscillation entre zones de positionnement lorsque l'utilisateur se trouve proche de leurs frontières. Selon ce mécanisme d'hystérésis, l'indication de positionnement passe d'une valeur d'indication de positionnement optimal à une valeur d'indication de positionnement trop lointain, respectivement trop proche, lorsque le niveau de signal radio mesuré devient inférieur à un seuil bas de niveau de signal radio optimal, respectivement supérieur à un seuil haut de niveau de signal radio optimal ; l'indication de positionnement passe d'une valeur d'indication de positionnement trop lointain, respectivement trop proche, à une valeur d'indication de positionnement optimal lorsque le niveau de signal radio mesuré devient supérieur à un seuil de niveau de signal radio trop faible, respectivement inférieur à un seuil de niveau de signal radio trop fort ; en outre, le seuil bas de niveau de signal radio optimal est inférieur au seuil de niveau de signal radio trop faible et le seuil haut de niveau de signal radio optimal est supérieur au seuil de niveau de signal radio trop fort. Ainsi, ce mécanisme d'hystérésis repose sur l'utilisation de seuils différents pour passer d'une zone de positionnement trop éloigné du point d'accès à une zone de positionnement optimal, et inversement ; de même, il repose sur l'utilisation de seuils différents pour passer d'une zone de positionnement trop proche du point d'accès à une zone de positionnement optimal, et inversement. Ceci permet de réduire l'occurrence d'oscillations affectant les valeurs des indications de positionnement par rapport aux différents points d'accès, qui restent susceptibles de se produire, même en utilisant un calcul de valeur moyenne de RSSI. En effet, le nombre d'échantillons de RSSI utilisés pour calculer la moyenne doit rester limité, pour éviter d'introduire trop d'inertie dans l'évaluation du positionnement du terminal mobile.

Selon une caractéristique particulière, une différence entre le seuil de niveau de signal radio trop faible et le seuil bas de niveau de signal radio optimal est supérieure à une différence entre le seuil haut de niveau de signal radio optimal et le seuil de niveau de signal radio trop fort.

On peut en effet avantageusement améliorer le procédé de gestion d'installation selon un mode de réalisation de l'invention en considérant une légère extension de la zone de positionnement optimal du nouvel équipement d'extension de couverture radio par rapport à la zone de positionnement optimal théorique, et ce, en modifiant les valeurs des seuils bas et haut de niveau de signal radio optimal. En effet, lorsque l'utilisateur se trouve en bordure de zone de positionnement optimal, une légère oscillation parasite du RSSI pourrait le faire passer dans la zone de positionnement trop proche ou dans la zone de positionnement trop lointain, et le mécanisme d'hystérésis décrit ci-avant pourrait l'inciter à se déplacer pour revenir dans la zone de positionnement optimal, alors même qu'il s'y trouve déjà. Cette extension de la zone de positionnement optimal, par augmentation artificielle du seuil haut de niveau de signal radio optimal, et diminution du seuil bas de niveau de signal radio optimal permet de résoudre ce problème.

Cependant, l'amplitude de l'extension peut avantageusement être supérieure à la frontière entre la zone de positionnement optimal et la zone de positionnement trop lointain, par rapport à la frontière entre la zone de positionnement optimal et la zone de positionnement trop proche. En effet, à la frontière avec la zone de positionnement trop lointain, il est indispensable de ne pas indiquer à l'utilisateur qu'il est trop loin alors qu'en réalité sa position est encore bonne, car cela limiterait l'amplitude de l'extension de couverture Wi-Fi.

En revanche, à la frontière entre la zone de positionnement optimal et la zone de positionnement trop proche, il n'est pas problématique d'indiquer par erreur à l'utilisateur qu'il est trop près d'un point d'accès alors qu'en réalité le terminal mobile se trouve dans une zone de positionnement optimal. En effet, cette indication erronée aura pour seul effet de pousser l'utilisateur à éloigner un peu plus son équipement d'extension de couverture du point d'accès en question, ce qui augmentera avantageusement l'extension de couverture radio obtenue.

Selon un mode de réalisation, un tel procédé de gestion d'installation comprend également une restitution d'un nombre de premiers équipements d'extension de couverture radio par lesquels transiterait un signal radio échangé entre l'équipement d'extension de couverture radio additionnel et la passerelle domestique, si l'équipement d'extension de couverture radio additionnel était installé à la position courante du terminal mobile.

En effet, dans un réseau de communication local comprenant plusieurs équipements d'extension de couverture radio, ces derniers peuvent être connectés en cascade. Cependant, pour une performance optimale du réseau Wi-Fi, il est important de limiter autant que possible le nombre de sauts Wi-Fi de chaque équipement d'extension de couverture radio jusqu'à la passerelle domestique.

Par conséquent, en complément des indications de positionnement du terminal mobile par rapport aux différents points d'accès, l'application, selon un mode de réalisation de l'invention, restitue également en temps réel le nombre de sauts Wi-Fi qui relieraient le nouvel équipement d'extension de couverture radio, placé à la position courante de l'utilisateur, à la passerelle domestique. Cette restitution peut se faire par exemple sous la forme de l'affichage d'un message sur l'écran du terminal mobile, ou par restitution d'un message audio, ou encore par émission d'un certain nombre de bips sonores. La restitution peut indiquer le nombre de répéteurs Wi-Fi entre le nouvel équipement d'extension de couverture radio et la passerelle domestique (par exemple, un répéteur Wi-Fi intermédiaire), ou le nombre de sauts Wi-Fi (soit deux dans cet exemple, à savoir un saut du nouvel équipement au répéteur Wi-Fi intermédiaire, et un saut du répéteur Wi-Fi intermédiaire à la passerelle domestique). Lorsque le nombre de répéteurs Wi-Fi intermédiaires est supérieur ou égal à un (i.e. le nombre de sauts est supérieur ou égal à deux), l'application indique alors à l'utilisateur, par affichage d'un message textuel ou restitution d'un message audio, de rechercher un autre positionnement adéquat pour le nouvel équipement d'extension de couverture radio, plus proche de la passerelle domestique.

Selon un mode de réalisation, un tel procédé comprend également une restitution d'un message recommandant une connexion de l'équipement d'extension de couverture radio additionnel au réseau de communication local selon une technologie de communication filaire, par exemple Ethernet.

Ainsi, l'application peut, en début de parcours d'installation, indiquer à l'utilisateur que, si elle est possible, une connexion du répéteur Wi-Fi en Ethernet au réseau de communication local est préférable à une connexion en Wi-Fi.

L'invention concerne également un produit programme d'ordinateur comprenant des instructions de code de programme pour la mise en œuvre d'un procédé tel que décrit précédemment, lorsqu'il est exécuté par un processeur.

L'invention vise également un support d'enregistrement lisible par un ordinateur sur lequel est enregistré un programme d'ordinateur comprenant des instructions de code de programme pour l'exécution des étapes du procédé de gestion d'installation selon l'invention tel que décrit ci-dessus.

Un tel support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargé sur un réseau par exemple le réseau Internet.

Alternativement, le support d'enregistrement peut être un circuit intégré dans lequel le programme est incorporé, le circuit étant adapté pour exécuter ou pour être utilisé dans l'exécution du procédé de gestion d'installation précité.

L'invention concerne encore un dispositif de gestion d'installation d'un équipement d'extension de couverture radio additionnel dans un réseau de communication local comprenant une passerelle domestique et au moins un premier équipement d'extension de couverture radio. La passerelle domestique et ledit au moins un premier équipement d'extension de couverture radio forment points d'accès au réseau de communication local. Un tel dispositif est apte à se déplacer dans le réseau de communication local.

Il comprend au moins un processeur configuré pour :
- déterminer une indication de positionnement du dispositif par rapport auxdits points d'accès,
   l'indication de positionnement pouvant prendre une valeur choisie au sein d'un groupe de valeurs comprenant une indication de positionnement trop lointain, une indication de positionnement trop proche, et une indication de positionnement optimal ;
- restituer une position adéquate d'installation de l'équipement d'extension de couverture radio additionnel, la position adéquate correspondant à une position courante du dispositif lorsqu'au moins une des indications de positionnement prend une valeur d'indication de positionnement optimal et qu'aucune des indications de positionnement ne prend une valeur d'indication de positionnement trop proche.

De préférence, un tel dispositif est intégré dans un terminal mobile d'utilisateur, tel qu'un téléphone intelligent de type smartphone, ou une tablette par exemple.

Le dispositif de gestion d'installation et le programme d'ordinateur correspondants précités présentent au moins les mêmes avantages que ceux conférés par le procédé de gestion d'installation selon la présente invention.

### Présentation des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
[Fig 1] illustre un exemple d'environnement de mise en œuvre de l'invention selon un mode particulier de réalisation de l'invention ;
[Fig 2] illustre sous forme d'organigramme des étapes du procédé de gestion d'installation selon un mode de réalisation de l'invention ;
[Fig 3] décrit le mécanisme d'hystérésis mis en œuvre selon un mode de réalisation du procédé de la figure 2 ;
[Fig 4] présente le mécanisme d'extension de la zone de positionnement optimal mis en œuvre selon un mode de réalisation du procédé de la figure 2 ;
[Fig 5] illustre un exemple pratique de mise en œuvre de l'application de gestion d'installation d'un nouvel équipement d'extension de couverture radio, selon un mode de réalisation, plus particulièrement dans une première position d'un utilisateur ;
[Fig 6] illustre l'exemple pratique de la figure 5, dans une deuxième position de l'utilisateur ;
[Fig 7] illustre l'exemple pratique de la figure 5, dans une troisième position de l'utilisateur ;
[Fig 8] illustre l'exemple pratique de la figure 5, dans une quatrième position de l'utilisateur ;
[Fig 9] illustre la position finale d'installation du nouvel équipement d'extension de couverture radio dans l'exemple pratique de la figure 5 ;
[Fig 10] illustre la structure matérielle d'un dispositif configuré pour mettre en œuvre le procédé de gestion d'installation d'un équipement d'extension de couverture radio selon un mode de réalisation de l'invention.

### Description détaillée de modes de réalisation de l'invention

Le procédé de gestion d'installation d'un équipement d'extension de couverture radio décrit ici permet à un utilisateur de trouver un positionnement optimal pour un équipement domestique nécessitant une connexion selon une technologie radio à un réseau de communication local, tel que par exemple un répéteur Wi-Fi. Avantageusement, il n'est pas nécessaire de brancher le répéteur Wi-Fi au préalable pour identifier cet emplacement.

Ce procédé s'appuie sur une application dédiée exécutée par un terminal mobile de l'utilisateur, par exemple un smartphone (pour « téléphone intelligent » en anglais).

Il permet à l'utilisateur d'identifier des zones de son habitat où il est possible d'installer un équipement d'extension de couverture radio additionnel, en complément d'un ou plusieurs équipements d'extension de couverture radio déjà installés, de sorte que la communication avec la passerelle domestique et la couverture radio de l'habitat soient optimales.

Pour ce faire, l'utilisateur se déplace dans son habitat, avec son terminal mobile. Des mesures de niveaux de signal radio échangés entre le terminal mobile et les différents points d'accès au réseau de communication local sont effectuées en temps réel, et permettent de restituer à l'utilisateur des indications de positionnement trop proche, trop lointain ou optimal, par rapport aux différents points d'accès. L'utilisateur peut adapter sa position, en fonction de ces indications. Lorsqu'il se trouve dans une zone de positionnement optimal par rapport à l'un des points d'accès, et qu'il n'est trop proche d'aucun des points d'accès, la position courante du terminal mobile correspond à une position adéquate d'installation de l'équipement d'extension de couverture radio additionnel.

Les mesures des niveaux de signal radio peuvent être effectuées par le terminal mobile, ou par les points d'accès au réseau. Dans le mode de réalisation qui sera décrit plus en détail par la suite en relation avec les figures, on s'attache à décrire un exemple dans lequel les mesures sont réalisées par les points d'accès au réseau local. Autrement dit, le point d'accès (passerelle domestique ou répéteur Wi-Fi déjà installé) mesure le niveau de réception du signal radio émis par le smartphone de l'utilisateur. Ceci permet d'être agnostique au logiciel du smartphone de l'utilisateur.

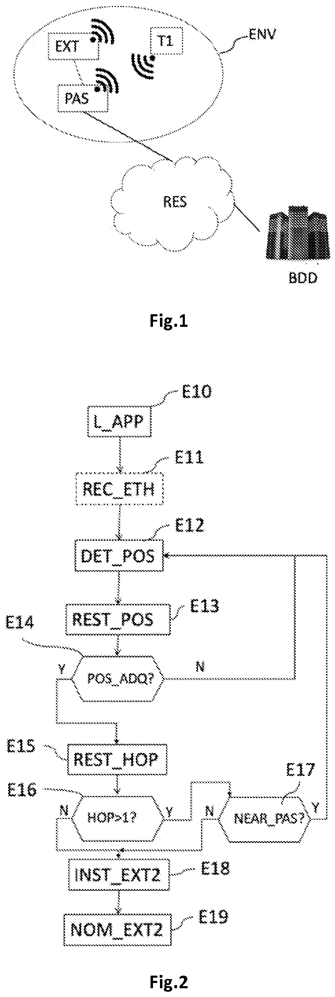

La **figure 1** illustre un exemple d'environnement de mise en œuvre de l'invention selon un mode particulier de réalisation de l'invention.

L'environnement de mise en œuvre comprend un environnement domestique d'un utilisateur ENV comprenant une passerelle domestique PAS connectée à un réseau de communication IP (pour « Internet Protocol » en anglais), nommé RES sur la **figure 1****.**

La passerelle domestique PAS est configurée d'une part pour échanger des données avec des serveurs ou des terminaux via le réseau de communication RES, et d'autre part pour établir un réseau local sans fil en Wi-Fi dans l'environnement domestique ENV. Ainsi, des équipements domestiques de l'utilisateur placés dans l'environnement domestique ENV peuvent communiquer vers/depuis le réseau de communication RES via le réseau local Wi-Fi de la passerelle domestique PAS.

L'environnement domestique de l'utilisateur ENV peut comprendre par exemple une ou des zones non couvertes par le réseau local Wi-Fi de la passerelle domestique PAS, car hors de portée du signal radio, ou dans lesquelles le niveau de signal radio est trop faible.

Dans ces zones non couvertes ou mal couvertes, lorsque l'utilisateur souhaite utiliser un équipement domestique nécessitant une connexion au réseau local Wi-Fi de la passerelle domestique PAS, le service Wi-Fi est trop faible voire inexistant car la zone est trop loin de la passerelle domestique PAS ou des obstacles impactant les liaisons Wi-Fi sont placés entre l'équipement domestique et la passerelle domestique PAS.

Il est connu d'utiliser des équipements d'extension de couverture radio pour résoudre cet inconvénient, par exemple un répéteur Wi-Fi noté EXT sur la **figure 1****.** Un tel répéteur Wi-Fi relaie auprès des équipements domestiques les signaux échangés avec la passerelle domestique, pour étendre la zone de couverture de cette dernière, et ainsi réduire l'étendue des zones non couvertes. Selon un mode de réalisation de l'invention, le procédé de gestion d'installation d'un équipement d'extension de couverture radio additionnel permet, dans un environnement domestique dans lequel le réseau de communication local comprend au moins deux points d'accès, à savoir la passerelle domestique PAS et au moins un premier répéteur Wi-Fi EXT, d'identifier la ou les zones où installer un répéteur Wi-Fi additionnel. Un tel procédé est par exemple mis en œuvre par un terminal mobile T1 de l'utilisateur, par exemple un smartphone (« téléphone intelligent » en anglais), sur lequel une application dédiée a été téléchargée et installée. Le terminal T1 est configuré pour communiquer avec la passerelle domestique PAS et avec le répéteur Wi-Fi EXT par exemple via le réseau local Wi-Fi de la passerelle domestique PAS.

Selon un mode particulier de réalisation de l'invention, l'environnement de mise en œuvre comprend également une base de données BDD configurée pour mémoriser des seuils de niveaux de signal Wi-Fi utilisés par le procédé de gestion d'installation selon un mode de réalisation de l'invention. Une telle base de données BDD est par exemple connectée au réseau de communication RES afin de communiquer avec le terminal T1.

La **figure 2** illustre sous forme d'organigramme des étapes du procédé de gestion d'installation selon un mode de réalisation de l'invention.

Au cours d'une étape L_APP E10, l'utilisateur lance l'exécution de l'application de gestion d'installation d'un répéteur Wi-Fi, qu'il a préalablement installée sur son terminal T1.

Lors d'une étape préalable optionnelle REC_ETH E11, le terminal T1 restitue à l'utilisateur un message lui recommandant une connexion filaire, par exemple une connexion Ethernet, plutôt qu'une connexion radio, par exemple Wi-Fi, pour le nouveau répéteur Wi-Fi qu'il souhaite installer. Ce message peut être un message vocal émis par le terminal T1, ou un message textuel qui s'affiche sur l'écran du terminal mobile T1.

Lors d'une étape DET_POS E12, le terminal T1 détermine une information relative à son positionnement par rapport à chacun des points d'accès au réseau local, à savoir, dans l'exemple de la **figure 1****,** la passerelle domestique PAS, et le premier répéteur Wi-Fi EXT déjà installé.

Dans un mode de réalisation préférentiel, l'évaluation en temps réel du positionnement du terminal T1 par rapport à chaque point d'accès Wi-Fi s'effectue par mesure, par les points d'accès, des niveaux de signal Wi-Fi émis par le terminal T1, à savoir le RSSI (pour l'anglais « Received Signal Strength Indicator »). Les valeurs de RSSI mesurés par chaque point d'accès sont par exemple centralisées au niveau de la passerelle domestique PAS, par un agent logiciel maître, qui les transmet à l'application de gestion d'installation en cours d'exécution sur le terminal T1.

Ainsi, lors de l'étape E12, le terminal T1 obtient une information représentative d'un niveau de signal Wi-Fi émis par le terminal mobile et reçu par chaque point d'accès. Une telle information de signal Wi-Fi est reçue par le terminal T1 en provenance de la passerelle PAS.

Par exemple, l'application exécutée par le terminal T1 appelle une Web API de la passerelle domestique PAS pour obtenir le niveau de signal RSSI reçu par chaque point d'accès en provenance du terminal T1, et la passerelle domestique PAS lui transmet un tel niveau de signal. La comparaison des valeurs de RSSI à des seuils dont les valeurs ont été déterminées de manière expérimentale, permet de déterminer si le terminal T1 est trop proche d'un point d'accès, trop éloigné d'un point d'accès, ou à une distance optimale d'un point d'accès.

Les valeurs de seuils utilisées dépendent de la bande Wi-Fi sur laquelle le smartphone T1 est connecté à un instant donné, à savoir la bande Wi-Fi à 2,4GHz ou à 5GHz par exemple.

Pour un terminal mobile T1 connecté en Wi-Fi dans la bande 2,4GHz, on peut considérer que la frontière entre une zone de positionnement trop lointain et une zone de positionnement optimal par rapport à un point d'accès est associée à une valeur seuil de RSSI comprise entre -79 dBm et - 86 dBm environ. De même, la frontière entre une zone de positionnement trop proche et une zone de positionnement optimal par rapport à un point d'accès est associée à une valeur seuil de RSSI comprise entre -57 dBm et -64 dBm environ.

Ainsi, pour distinguer les zones de positionnement « trop proche », « optimal » et « trop lointain » par rapport à chaque point d'accès Wi-Fi, l'application se base sur deux seuils de RSSI, qui permettent respectivement de déterminer la frontière entre les zones de positionnement « trop proche » et « optimal » d'une part, et entre les zones de positionnement « optimal » et « trop lointain » d'autre part.

Toutefois, le RSSI utilisé pour l'aide au positionnement est, par nature, une information subissant en permanence des variations, car elle est influencée par exemple par la manière dont l'utilisateur tient son smartphone, ou par la position de l'utilisateur par rapport à son smartphone et aux points d'accès Wi-Fi.

Lorsque l'utilisateur se trouve proche des frontières entre zones de positionnement, ces variations peuvent générer des oscillations dans les indications de positionnement déterminées par l'application. Ainsi, même si l'utilisateur ne bouge plus, l'application pourrait par exemple le considérer tantôt dans la zone de positionnement « trop proche », tantôt dans la zone de positionnement « optimal », avec un changement toutes les 2 à 3 secondes.

Ceci pourrait générer des indications déconcertantes pour l'utilisateur et nuirait au bon positionnement du nouveau répéteur Wi-Fi.

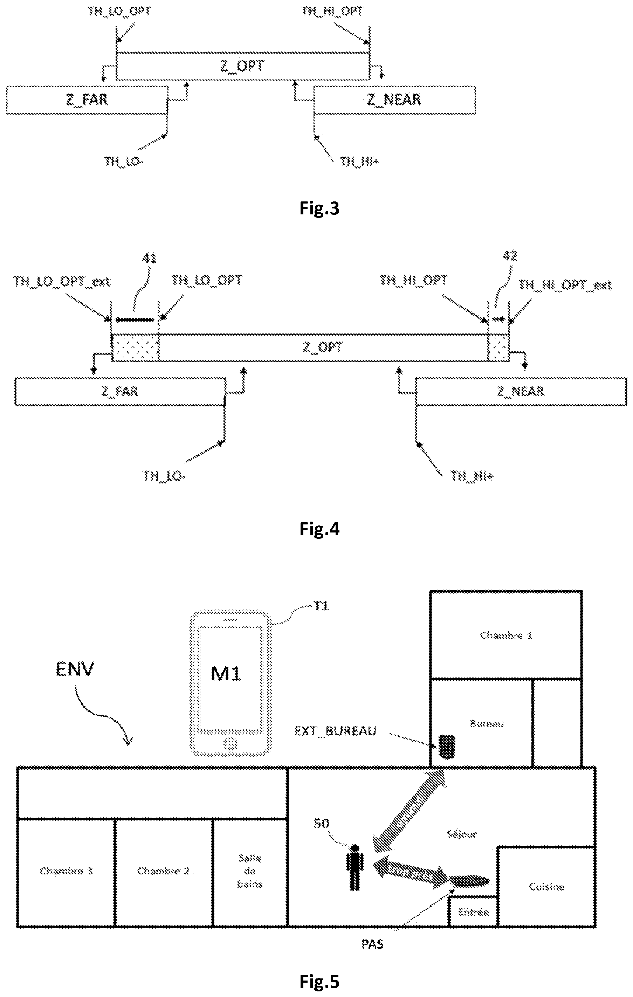

En effet, les indications de positionnement déterminées au cours de l'étape DET_POS E12 sont restituées en temps réel à l'utilisateur au cours d'une étape REST_POS E13, comme on le verra plus en détail par la suite en relation avec les **figures 5à 9**.

Au cours de cette étape REST_POS E13, les indications que l'application peut restituer à l'utilisateur pour le guider sont par exemple :
- vous êtes trop près de la passerelle domestique PAS et/ou du (ou des) répéteur(s) EXT ;
- vous être trop loin de la passerelle domestique PAS et des autres répéteur(s) EXT ;
- vous êtes dans une zone optimale pour l'installation de votre nouveau répéteur Wi-Fi.

Tant que l'application n'a pas signalé à l'utilisateur qu'il se trouve dans une zone adéquate pour l'installation du nouveau répéteur Wi-Fi, ce dernier est invité à se déplacer dans son environnement domestique ENV.

Pour éviter les problèmes d'oscillation des valeurs des indications de positionnements susmentionnés, un mode de réalisation de l'invention repose sur la mise en œuvre conjointe de trois mécanismes :
MEC1- une utilisation de la moyenne des dernières valeurs de RSSI, plutôt que la valeur instantanée du RSSI ;
MEC2- une modification des seuils en fonction de la zone dans laquelle l'utilisateur se trouve (mécanisme d'hystérésis) ;
MEC3- une extension (limitée) de la zone de positionnement « optimal » pour compenser l'impact de l'oscillation résiduelle du RSSI qui peut subsister même après moyennage.

Le premier mécanisme MEC1 consiste à effectuer un calcul de moyenne de plusieurs mesures successives de RSSI, et à comparer cette moyenne aux différents seuils définissant les frontières entre zones pour déterminer la valeur de l'indication de positionnement du terminal T1 par rapport à un point d'accès. Par exemple, si le point d'accès effectue une mesure de RSSI toutes les 0,5s, il calcule une moyenne sur quatre échantillons, soit sur une fenêtre temporelle de deux secondes. On notera qu'il est important de limiter le nombre d'échantillons de RSSI utilisés pour calculer la moyenne, afin d'éviter d'introduire trop d'inertie dans l'évaluation du positionnement du terminal mobile T1 par rapport aux différents points d'accès.

En conséquence, même après moyennage, le RSSI peut encore osciller. On introduit donc le mécanisme d'hystérésis MEC2, illustré en **figure 3****.**

Sur cette **figure 3****,** on a illustré trois zones de positionnement du terminal T1 par rapport à un point d'accès au réseau, par exemple la passerelle PAS, ou le premier répéteur Wi-Fi EXT.

La zone Z_OPT correspond à une zone de positionnement optimal par rapport au point d'accès ; la zone Z_FAR correspond à une zone de positionnement trop lointain par rapport au point d'accès ; enfin, la zone Z_NEAR correspond à une zone de positionnement trop proche par rapport au point d'accès.

Le mécanisme d'hystérésis MEC2 consiste à utiliser deux seuils de RSSI différents, à la frontière entre deux zones.

Ainsi, si le terminal est localisé dans la zone Z_OPT de positionnement optimal par rapport au point d'accès, en fonction de la valeur de RSSI mesurée, et éventuellement moyennée, il faut que la valeur de RSSI devienne inférieure à un seuil bas de niveau de signal radio optimal TH_LO_OPT, pour que l'indication de son positionnement par rapport au point d'accès prenne la valeur « trop lointain », et que le terminal T1 soit donc localisé par l'application dans la zone Z_FAR. A l'inverse, si le terminal est localisé dans la zone Z_FAR de positionnement trop lointain par rapport au point d'accès, en fonction de la valeur de RSSI mesurée, et éventuellement moyennée, il faut que la valeur de RSSI devienne supérieure à un seuil de niveau de signal radio trop faible TH_LO-, pour que l'indication de son positionnement par rapport au point d'accès prenne la valeur d'indication de positionnement optimal, et que le terminal T1 soit donc localisé par l'application dans la zone Z_OPT. Le seuil bas de niveau de signal radio optimal TH_LO_OPT est strictement inférieur au seuil de niveau de signal radio trop faible TH_LO-, par exemple inférieur de 4 dBm environ.

On évite ainsi des oscillations intempestives sur les valeurs des indications de positionnement du terminal mobile T1, dues aux fluctuations des valeurs de RSSI mesurées, et éventuellement moyennées, lorsque l'utilisateur se trouve à la frontière entre les sones Z_OPT et Z_FAR.

De même, quand l'application de gestion d'installation détermine que le terminal T1 est dans la zone de positionnement optimal Z_OPT par rapport à un point d'accès, elle ne modifiera la valeur de cette indication de positionnement en « trop proche », que si la valeur de RSSI mesurée, ou la moyenne des valeurs de RSSI mesurées sur une fenêtre temporelle donnée, devient supérieure à un seuil haut de niveau de signal radio optimal TH_HI_OPT. A l'inverse, si le terminal T1 est considéré comme trop proche du point d'accès, et est donc localisé par l'application dans la zone Z_NEAR, l'application ne déterminera que le terminal T1 passe dans la zone de positionnement optimal Z_OPT, que si la valeur de RSSI mesurée, ou la moyenne des valeurs de RSSI mesurées, devient inférieure à un seuil de niveau de signal radio trop fort TH_HI+, qui est strictement inférieur au seuil haut de niveau de signal radio optimal TH_HI_OPT, par exemple de 4 dBm environ.

Les seuils bas et haut de niveau de signal radio optimal TH_LO_OPT et TH_HI_OPT sont donc les seuils qui, lorsqu'ils sont franchis par le RSSI, déclenchent un changement de la valeur de l'indication de positionnement du terminal T1 par rapport au point d'accès, lorsque l'utilisateur est considéré par l'application de gestion d'installation comme étant dans la zone de positionnement optimal Z_OPT.

En revanche, les seuils de niveau de signal radio trop fort TH_HI+, respectivement trop faible TH_LO-, sont les seuils de RSSI utilisés pour déclencher un changement de zone de positionnement, lorsque l'application considère que le terminal T1 est localisé dans une zone de positionnement Z_NEAR trop proche du point d'accès, respectivement Z_FAR trop lointain. Pour améliorer encore ce mode de fonctionnement, et éviter toute légère oscillation parasite du RSSI lorsque l'utilisateur se trouve en bordure de la zone de positionnement optimal Z_OPT, on procède, dans un mode de réalisation avantageux, à une légère extension de la zone de positionnement optimal Z_OPT, par rapport à la zone de positionnement optimal théorique, définie par les seuils bas et haut de niveau de signal radio optimal TH_LO_OPT et TH_HI_OPT, selon le mécanisme MEC3.

Cette variante de réalisation est illustrée en **figure 4****.** Ainsi, la zone de positionnement optimal Z_OPT considérée par l'application est légèrement étendue dans les deux sens par rapport à la zone de positionnement optimal théorique, par ajout des deux zones d'extension référencées 41 et 42. En d'autres termes, on introduit un nouveau seuil bas de niveau de signal radio optimal étendu TH_LO_OPT_ext, qui peut être par exemple de 3 dBm inférieur au seuil bas de niveau de signal radio optimal TH_LO_OPT. De même, on introduit un nouveau seuil haut de niveau de signal radio optimal étendu TH_HI_OPT_ext, qui peut être par exemple de 1 dBm supérieur au seuil haut de niveau de signal radio optimal TH_HI_OPT.

En effet, l'amplitude de l'extension peut être supérieure à la frontière avec la zone de positionnement trop lointain Z_FAR par rapport à celle effectuée à la frontière avec la zone de positionnement trop proche Z_NEAR. De fait, à la frontière avec la zone de positionnement trop lointain Z_FAR, il est indispensable de ne pas indiquer à l'utilisateur qu'il est trop loin alors qu'en réalité sa position est encore bonne, car cela limiterait l'amplitude de l'extension de couverture Wi-Fi.

En revanche, à la frontière avec la zone de positionnement trop proche Z_NEAR, il n'est pas critique d'indiquer à l'utilisateur qu'il est trop près alors qu'en réalité sa position est dans la zone optimale Z_OPT, car cela poussera simplement l'utilisateur à éloigner un peu plus son répéteur Wi-Fi du point d'accès considéré, ce qui au passage augmentera l'amplitude de l'extension de couverture Wi-Fi.

Les trois mécanismes MEC1, MEC2 et MEC3 décrits ci-dessus sont mis en œuvre en temps réel pour chacun des points d'accès PAS et EXT déjà installés.

Selon un mode particulier de réalisation de l'invention, les différents seuils utilisés par le terminal T1 pour la mise en œuvre du procédé décrit ci-dessus sont obtenus par le terminal T1 à partir d'une base de données BDD (sur la **figure 1**). Par exemple, lors de l'étape E10 de lancement de l'application de gestion d'installation d'un équipement d'extension de couverture radio, le terminal mobile T1 peut interroger la base de données BDD via la passerelle domestique PAS et le réseau de communication RES pour obtenir les valeurs des seuils TH_LO_OPT, TH_HI_OPT, TH_LO-, TH_Hl+, TH_LO_OPT_ext et TH_HI_OPT_ext à utiliser.

Selon un autre mode particulier de réalisation de l'invention, les seuils peuvent être fournis au terminal T1 lors du téléchargement de l'application.

Selon un autre mode particulier de réalisation de l'invention, les valeurs de seuils sont mémorisées dans la base de données BDD en association avec au moins une caractéristique du terminal mobile T1. Selon cette variante, lorsque le terminal mobile T1 interroge la base de données BDD, il fournit une information indicative de cette caractéristique de sorte que la base de données BDD lui envoie les valeurs de seuils correspondantes. Ainsi, les valeurs de seuils peuvent être adaptées en fonction des caractéristiques du terminal mobile mettant en œuvre le procédé. Par exemple, une telle caractéristique du terminal mobile peut être un type de système d'exploitation du terminal, un type de connexion Wi-Fi, etc.

Par exemple, les seuils sont définis en fonction du type de connexion du terminal T1. Autrement dit, les seuils sont différents si le terminal T1 est connecté en Wi-Fi 2,4GHz ou en Wi-Fi 5GHz. Le résultat du procédé n'est ainsi pas dépendant des caractéristiques du terminal T1.

Selon une autre variante, les valeurs de seuils sont mémorisées dans la base de données BDD en association avec une caractéristique relative à l'équipement d'extension de couverture radio à installer, par exemple, la puissance du répéteur Wi-Fi.

En revenant à la description de la **figure 2****,** les trois mécanismes décrits ci-dessus sont donc mis en œuvre pour permettre d'effectuer une restitution aussi précise que possible des indications de positionnement du terminal T1 par rapport à chacun des points d'accès au réseau local, lors de l'étape REST_POS E13.

Au cours d'une étape POS_ADQ ? E14, l'application teste les indications de positionnement du terminal T1 par rapport aux différents points d'accès PAS et EXT du réseau local, pour déterminer s'il se trouve dans une position adéquate d'installation du nouveau répéteur Wi-Fi EXT2.

Dès que le terminal T1 se trouve dans une zone de positionnement optimal Z_OPT par rapport à un point d'accès, par exemple la passerelle PAS, et qu'il ne se trouve, pour aucun autre point d'accès EXT, dans une zone de positionnement trop proche Z_NEAR, l'application considère qu'il se trouve dans une position adéquate. Si ce n'est pas le cas, l'utilisateur est invité à se déplacer dans son habitation ENV, à la recherche d'une position adéquate.

Dans un contexte de réseau local comprenant de multiples répéteurs Wi-Fi, ces derniers peuvent être connectés en cascade. Or, pour une performance optimale du réseau Wi-Fi, il est très important de limiter autant que possible le nombre de sauts Wi-Fi de chaque répéteur Wi-Fi jusqu'à la passerelle PAS.

Par conséquent, en complément des indications de positionnement par rapport aux autres points d'accès restituées lors de l'étape E13, l'application va également afficher en temps réel, au cours d'une étape REST_HOP E15, le nombre de sauts Wi-Fi qui relieraient le répéteur Wi-Fi EXT2, placé à la position courante du terminal T1, à la passerelle PAS. Lorsque ce nombre est supérieur à un (étape E16), l'application indique alors à l'utilisateur, au cours d'une étape E17 NEAR_PAS, de regarder si un positionnement un peu plus proche de la passerelle PAS serait possible.

En fonction de la nouvelle position courante du terminal T1, les étapes E12 à E16 sont réitérées. Cependant, si l'on cherche avantageusement à réduire le nombre de sauts Wi-Fi, cette réduction n'est pas toujours réalisable, en fonction du contexte. Le message affiché à l'utilisateur lors de l'étape E17 NEAR_PAS n'est donc qu'une recommandation non bloquante.

Si aucune autre position, présentant un nombre de sauts Wi-Fi plus réduit, n'est identifiée au cours des étapes E12 à E16, il est possible qu'il n'y ait pas d'autre choix que d'installer le nouveau répéteur Wi-Fi EXT2 à la position courante du terminal T1, qui est alors considérée comme une position adéquate d'installation.

Ainsi, dans le cas où le nouveau répéteur Wi-Fi EXT2 est en contact radio direct avec la passerelle (un seul saut), ou dans le cas où il n'est pas possible d'identifier une position répondant aux critères d'installation avec un seul saut Wi-Fi, la position courante du terminal T1 peut être considérée comme une position adéquate d'installation, et l'utilisateur peut procéder, au cours d'une étape E18 INST_EXT2 à l'installation, de préférence en Ethernet, du nouveau répéteur Wi-Fi dans le réseau de communication local.

Au cours d'une étape NOM_EXT2 E19, l'utilisateur est invité à donner un nom au nouveau répéteur Wi-Fi qu'il vient d'installer. Ce nom pourra avantageusement être utilisé dans les messages affichés par l'application pour guider l'utilisateur dans l'installation d'un futur équipement d'extension de couverture radio additionnel.

On présente désormais, en relation avec les **figures 5à 9**, un exemple pratique de mise en œuvre de l'application de gestion d'installation d'un nouvel équipement d'extension de couverture radio, qui permet de guider un utilisateur pour qu'il trouve un positionnement adéquat de son nouveau répéteur Wi-Fi, afin de bénéficier des meilleures performances de couverture radio dans son réseau domestique.

Comme illustré sur la **figure 5****,** on considère un environnement domestique ENV, représenté sous la forme du plan d'une habitation, comprenant un séjour, trois chambres, un bureau, une salle de bains, une entrée et une cuisine. Une passerelle domestique PAS est installée dans le séjour, à proximité de l'entrée. Un premier répéteur Wi-Fi EXT, appelé EXT_BUREAU, est installé dans le bureau. L'utilisateur 50 souhaite cependant installer un deuxième répéteur Wi-Fi EXT2, car il a encore des problèmes de couverture Wi-Fi dans une aile de son habitation.

Cet utilisateur 50, équipé du terminal mobile T1, se trouve dans le séjour. Il lance l'application de gestion d'installation décrite ci-avant en relation avec les **figures 2 à 4**. A cette position, l'application de gestion d'installation détermine qu'il est trop près de la passerelle PAS, mais dans une zone de positionnement optimal Z_OPT par rapport au répéteur EXT_BUREAU (étape E12). L'application demande donc à l'utilisateur 50 de se diriger vers la zone de l'habitation ENV qui est mal couverte par le Wi-Fi. L'application affiche alors sur l'écran du terminal T1 un message M1 « Veuillez vous éloigner de votre passerelle » (étape E13).

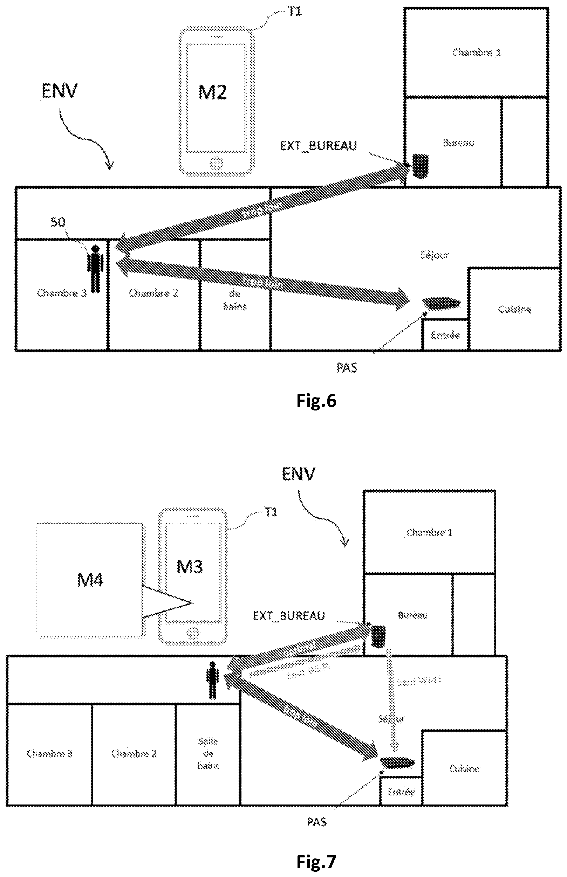

On suppose que l'utilisateur 50 s'y rend, mais sans regarder l'écran de son smartphone T1, et qu'il s'éloigne donc trop. Comme illustré sur la **figure 6****,** il se rend dans la Chambre 3. A cette position, l'application de gestion d'installation détermine qu'il est trop loin de chacun des deux points d'accès PAS et EXT_BUREAU (étape E12). Un message M2 « Veuillez vous rapprocher de votre passerelle ou d'un des répéteurs » s'affiche sur l'écran du smartphone T1 (étape E13).

Suivant les instructions données par l'application, l'utilisateur 50 se rapproche des deux points d'accès existants PAS et EXT_BUREAU, et arrive dans la position illustrée sur la **figure 7****,** à savoir dans le couloir, à proximité de la salle de bains. Selon le test effectué à l'étape E14 de la **figure 2****,** l'application détermine que cette position est une position adéquate de positionnement du nouveau répéteur Wi-Fi EXT2, car le terminal T1 est à une distance optimale du premier répéteur EXT_BUREAU, et n'est pas trop près de la passerelle PAS. L'application affiche alors sur l'écran du terminal T1 un message M3 « Vous êtes dans une zone optimale pour installer votre nouveau répéteur ». Cependant, conformément au test de l'étape E16 de la **figure 2****,** l'application détermine qu'à cette position, deux sauts Wi-Fi sépareraient le nouveau répéteur EXT2 de la passerelle domestique PAS. Un avertissement M4 est donc affiché sur l'écran du terminal T1 : « 2 sauts Wi-Fi relieraient votre répéteur à la passerelle. Afin d'optimiser les performances de votre réseau, regardez s'il est possible de trouver un emplacement plus proche de la passerelle » (étape E17).

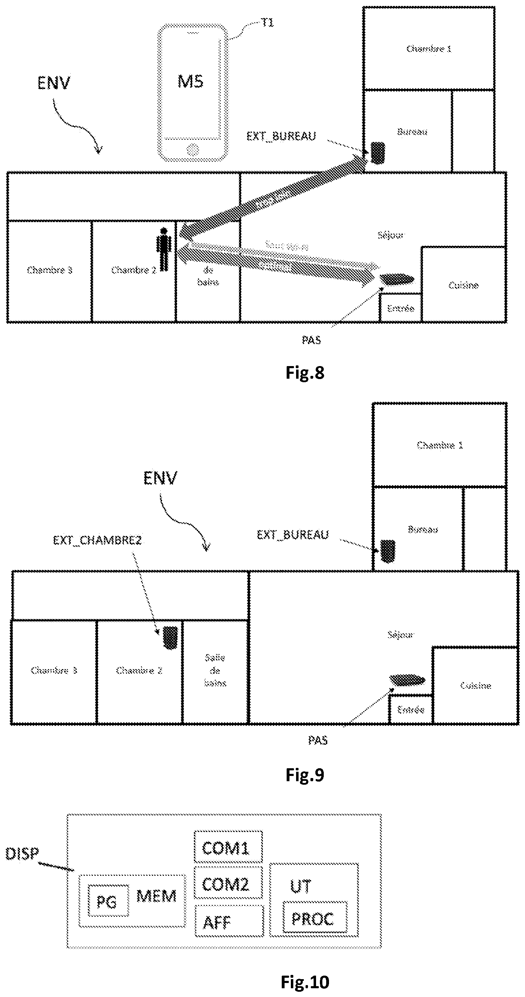

Comme illustré sur la **figure 8****,** l'utilisateur 50 suit les instructions données par l'application, et se rapproche de la passerelle PAS en se plaçant dans la Chambre 2. A cet endroit le nouveau répéteur Wi-Fi EXT2 se connecterait directement à la passerelle PAS, et il n'y aurait donc plus qu'un seul saut Wi-Fi entre les deux. L'application affiche sur l'écran du terminal T1 un message M5 « Vous êtes dans une zone optimale pour installer votre nouveau répéteur ».

L'utilisateur 50 décide donc de brancher son nouveau répéteur Wi-FI EXT2 dans la pièce « Chambre 2 », comme illustré en **figure 9** (étape E18). Il lui donne le nom EXT_CHAMBRE2, par exemple par saisie sur l'écran du smartphone T1 (étape E19), ou par enregistrement vocal.

Grâce à ce positionnement optimal de son répéteur Wi-Fi par rapport aux points d'accès existants, et à une connexion directe (un seul saut Wi-Fi) du nouveau répéteur Wi-Fi à la passerelle PAS, l'utilisateur 50 bénéficiera des meilleures performances Wi-Fi possibles dans son habitation ENV. On présente désormais, en relation avec la **figure 10****,** la structure matérielle d'un dispositif DISP configuré pour mettre en œuvre le procédé de gestion d'installation d'un équipement d'extension de couverture radio selon un mode de réalisation de l'invention.

Selon un mode particulier de réalisation de l'invention, le dispositif DISP a l'architecture classique d'un téléphone mobile, de type smartphone, et comprend notamment une mémoire MEM, une unité de traitement UT, équipée par exemple d'un processeur PROC, et pilotée par le programme d'ordinateur PG stocké en mémoire MEM. Le programme d'ordinateur PG comprend des instructions pour mettre en œuvre les étapes du procédé de gestion d'installation d'un équipement d'extension de couverture radio tel que décrit précédemment, lorsque le programme est exécuté par le processeur PROC.

A l'initialisation, les instructions de code du programme d'ordinateur PG sont par exemple chargées dans une mémoire avant d'être exécutées par le processeur PROC. Le processeur PROC de l'unité de traitement UT met notamment en œuvre les étapes du procédé de gestion d'installation d'un équipement d'extension de couverture radio selon l'un quelconque de modes particuliers de réalisation décrits en relation avec les **figures 2 à 9****,** selon les instructions du programme d'ordinateur PG.

Le dispositif DISP comprend un module de communication COM1 configuré pour établir des communications avec un réseau IP, et/ou une passerelle domestique PAS selon une technologie Wi-Fi.

Selon un mode particulier de réalisation de l'invention, le dispositif DISP comprend un module de communication COM2 configuré pour établir des communications via un réseau de communication mobile 3G/4G ou 5G.

Le dispositif DISP comprend également un module d'affichage AFF, permettant d'afficher des messages d'aide à l'installation, sur un écran. En variante, le module d'affichage AFF permet la restitution sonore de messages audio de guidage destinés à l'utilisateur.

Le terme module peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions.

La **figure 10** illustre seulement une manière particulière, parmi plusieurs possibles, de réaliser le dispositif DISP, afin qu'il effectue les étapes du procédé détaillé ci-dessus, en relation avec les

**figures 2à 4** (dans l'un quelconque des différents modes de réalisation, ou dans une combinaison de ces modes de réalisation). En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où le dispositif DISP est réalisé avec une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

L'invention vient d'être décrite dans le cas d'une technologie Wi-Fi et d'un réseau local Wi-Fi d'une passerelle domestique. Toutefois, le principe de l'invention décrit ci-dessus ne se limite pas aux seuls modes particuliers de réalisation décrits ci-dessus. Selon d'autres modes particuliers de réalisation de l'invention, l'invention s'applique également à d'autres types de technologie radio, par exemple Bluetooth et à d'autres types d'équipements.

## Revendications

1. Procédé de détermination d'une position adéquate pour l'installation d'un équipement d'extension de couverture radio additionnel (EXT2) dans un réseau de communication local comprenant une passerelle domestique (PAS) et au moins un premier équipement d'extension de couverture radio (EXT) formant des points d'accès audit réseau local, ledit procédé de gestion étant mis en œuvre par un terminal mobile (T1),
**le procédé étant caractérisé en ce qu'il comprend :**
- des mesures de niveaux de signaux radio échangés entre le terminal mobile et lesdits points d'accès, et la détermination (E12) d'une indication de positionnement associée à chaque mesure,
- lorsqu'au moins une des indications de positionnement est représentative d'un positionnement optimal et qu'aucune des autres indications de positionnement n'est représentative d'un positionnement trop proche, la restitution (E13) d'une information indiquant que la position du terminal mobile est adéquate pour l'installation dudit équipement d'extension de couverture radio additionnel.

2. Procédé de détermination d'une position adéquate selon la revendication 1, dans lequel l'indication de positionnement est représentative d'un positionnement trop lointain, trop proche ou optimal par rapport au point d'accès pour le positionnement de l'équipement d'extension de couverture additionnel.

3. Procédé de détermination d'une position adéquate selon l'une des revendications précédentes, **caractérisé en ce que,** tant que ladite position adéquate d'installation n'est pas restituée, il met en œuvre une restitution desdites indications de positionnement associées aux mesures de niveau.

4. Procédé de détermination d'une position adéquate selon l'une des revendications précédentes, **caractérisé en ce que** ladite détermination d'une indication de positionnement dudit terminal mobile par rapport à un desdits points d'accès comprend au moins une mesure d'un niveau instantané de signal radio échangé entre ledit terminal mobile et ledit point d'accès.

5. Procédé de détermination d'une position adéquate selon la revendication précédente, ledit terminal mobile communiquant avec lesdits points d'accès selon une technologie de communication sans fil Wi-Fi, **caractérisé en ce que** ladite mesure d'un niveau instantané de signal radio comprend une mesure, par ledit point d'accès, du niveau de puissance en réception du signal Wi-Fi émis par ledit terminal mobile.

6. Procédé de détermination d'une position adéquate selon la revendication précédente, **caractérisé en ce que** ladite détermination d'une indication de positionnement dudit terminal mobile par rapport à un desdits points d'accès comprend également un calcul d'une valeur moyenne de mesures, par ledit point d'accès, du niveau de puissance en réception du signal Wi-Fi émis par ledit terminal mobile, sur une fenêtre de temps de durée déterminée.

7. Procédé de détermination d'une position adéquate selon l'une quelconque des revendications 4 à 6, **caractérisé en ce qu'**un changement de valeur de ladite indication de positionnement se produit lorsque ledit niveau de signal radio mesuré franchit un seuil de niveau de signal radio déterminé.

8. Procédé de détermination d'une position adéquate selon la revendication 7, **caractérisé en ce que** ladite indication de positionnement passe d'une valeur d'indication de positionnement optimal à une valeur d'indication de positionnement trop lointain, respectivement trop proche, lorsque ledit niveau de signal radio mesuré devient inférieur à un seuil bas de niveau de signal radio optimal (TH_LO_OPT), respectivement supérieur à un seuil haut de niveau de signal radio optimal (TH_HI_OPT),
**en ce que** ladite indication de positionnement passe d'une valeur d'indication de positionnement trop lointain, respectivement trop proche, à une valeur d'indication de positionnement optimal lorsque ledit niveau de signal radio mesuré devient supérieur à un seuil de niveau de signal radio trop faible (TH_LO-), respectivement inférieur à un seuil de niveau de signal radio trop fort (TH_HI+),
**et en ce que** ledit seuil bas de niveau de signal radio optimal (TH_LO_OPT) est inférieur audit seuil de niveau de signal radio trop faible (TH_LO-) et ledit seuil haut de niveau de signal radio optimal (TH_HI_OPT) est supérieur audit seuil de niveau de signal radio trop fort (TH_HI+).

9. Procédé de détermination d'une position adéquate selon la revendication 8, **caractérisé en ce qu'**une différence entre ledit seuil de niveau de signal radio trop faible (TH_LO-) et ledit seuil bas de niveau de signal radio optimal (TH_LO_OPT, TH_LO_OPT_ext) est supérieure à une différence entre ledit seuil haut de niveau de signal radio optimal (TH_HI_OPT, TH_HI_OP_ext) et ledit seuil de niveau de signal radio trop fort (TH_HI+).

10. Procédé de détermination d'une position adéquate selon l'une quelconque des revendications précédentes, **caractérisé en ce qu'**il comprend également une restitution (E15) d'un nombre de premiers équipements d'extension de couverture radio par lesquels transiterait un signal radio échangé entre ledit équipement d'extension de couverture radio additionnel et ladite passerelle domestique, si ledit équipement d'extension de couverture radio additionnel était installé à ladite position courante dudit terminal mobile.

11. Procédé de détermination d'une position adéquate selon l'une quelconque des revendications précédentes,
**caractérisé en ce qu'**il comprend également une restitution (E11) d'un message recommandant une connexion dudit équipement d'extension de couverture radio additionnel audit réseau de communication local selon une technologie de communication filaire.

12. Produit programme d'ordinateur comprenant des instructions de code de programme pour la mise en œuvre d'un procédé de détermination d'une position optimale selon l'une quelconque des revendications 1 à 11, lorsqu'il est exécuté par un processeur.

13. Dispositif (DISP) de gestion d'installation d'un équipement d'extension de couverture radio additionnel (EXT2) dans un réseau de communication local comprenant une passerelle domestique (PAS) et au moins un premier équipement d'extension de couverture radio (EXT) formant des points d'accès audit réseau local,
**caractérisé en ce qu'**il comprend au moins un processeur (PROC) configuré pour :
- mesurer des niveaux de signaux radio échangés entre le terminal mobile et les points d'accès, et déterminer une indication de positionnement associée à chaque mesure,
- lorsqu'au moins une des indications de positionnement est représentative d'un positionnement optimal et qu'aucune des autres indications de positionnement n'est représentative d'un positionnement trop proche, restituer une information indiquant que la position du dispositif est adéquate pour l'installation dudit équipement d'extension de couverture radio additionnel.

## Patentansprüche

1. Verfahren zum Bestimmen einer geeigneten Position für die Installation einer zusätzlichen Funkabdeckungserweiterungseinrichtung (EXT2) in einem lokalen Kommunikationsnetzwerk, das ein Heimgateway (PAS) und mindestens eine erste Funkabdeckungserweiterungseinrichtung (EXT), die Zugangspunkte zu dem lokalen Netzwerk bilden, umfasst, wobei das Verwaltungsverfahren von einem mobilen Endgerät (T1) durchgeführt wird,
wobei das Verfahren **dadurch gekennzeichnet ist, dass** es umfasst:
- Messungen von Pegeln von Funksignalen, die zwischen dem mobilen Endgerät und den Zugangspunkten ausgetauscht werden, und das Bestimmen (E12) einer Positionierungsangabe, die jeder Messung zugeordnet ist,
- wenn mindestens eine der Positionierungsangaben repräsentativ für eine optimale Positionierung ist und keine der anderen Positionierungsangaben repräsentativ für eine zu nahe Positionierung ist, das Ausgeben (E13) einer Information, die angibt, dass die Position des mobilen Endgeräts für die Installation der zusätzlichen Funkabdeckungserweiterungseinrichtung geeignet ist.

2. Verfahren zum Bestimmen einer geeigneten Position nach Anspruch 1, wobei die Positionierungsangabe repräsentativ für eine in Bezug auf den Zugangspunkt zu weit entfernte, zu nahe oder optimale Positionierung für die Positionierung der zusätzlichen Abdeckungserweiterungseinrichtung ist.

3. Verfahren zum Bestimmen einer geeigneten Position nach einem der vorhergehenden Ansprüche, **dadurch gekennzeichnet, dass** es, solange die geeignete Installationsposition nicht ausgegeben wird, eine Ausgabe der den Pegelmessungen zugeordneten Positionierungsangaben durchführt.

4. Verfahren zum Bestimmen einer geeigneten Position nach einem der vorhergehenden Ansprüche, **dadurch gekennzeichnet, dass** das Bestimmen einer Positionierungsangabe des mobilen Endgeräts in Bezug auf einen der Zugangspunkte mindestens ein Messen eines momentanen Pegels eines Funksignals umfasst, das zwischen dem mobilen Endgerät und dem Zugangspunkt ausgetauscht wird.

5. Verfahren zum Bestimmen einer geeigneten Position nach dem vorhergehenden Anspruch, wobei das mobile Endgerät mit den Zugangspunkten gemäß einer drahtlosen Wi-Fi-Kommunikationstechnologie kommuniziert, **dadurch gekennzeichnet, dass** das Messen eines momentanen Funksignalpegels ein Messen, durch den Zugangspunkt, des Empfangsleistungspegels des von dem mobilen Endgerät gesendeten Wi-Fi-Signals umfasst.

6. Verfahren zum Bestimmen einer geeigneten Position nach dem vorhergehenden Anspruch, **dadurch gekennzeichnet, dass** das Bestimmen einer Positionierungsangabe des mobilen Endgeräts in Bezug auf einen der Zugangspunkte auch ein Berechnen eines Durchschnittswerts von Messungen, durch den Zugangspunkt, des Empfangsleistungspegels des von dem mobilen Endgerät gesendeten Wi-Fi-Signals über ein Zeitfenster von bestimmter Dauer umfasst.

7. Verfahren zum Bestimmen einer geeigneten Position nach einem der Ansprüche 4 bis 6, **dadurch gekennzeichnet, dass** eine Änderung des Werts der Positionierungsangabe eintritt, wenn der gemessene Funksignalpegel einen bestimmten Funksignalpegelschwellenwert überschreitet.

8. Verfahren zum Bestimmen einer geeigneten Position nach Anspruch 7, **dadurch gekennzeichnet, dass** die Positionierungsangabe von einem Wert für die Angabe einer optimalen Positionierung zu einem Wert für die Angabe einer zu weit entfernten beziehungsweise zu nahen Positionierung übergeht, wenn der gemessene Funksignalpegel kleiner als ein unterer Schwellenwert für einen optimalen Funksignalpegel (TH_LO_OPT) beziehungsweise größer als ein oberer Schwellenwert für den optimalen Funksignalpegel (TH_HI_OPT) wird,
dass die Positionierungsangabe von einem Wert für die Angabe einer zu weit entfernten oder zu nahen Positionierung zu einem Wert für die Angabe einer optimalen Positionierung übergeht, wenn der gemessene Funksignalpegel größer als ein Schwellenwert für einen zu schwachen Funksignalpegel (TH_LO-) beziehungsweise kleiner als ein Schwellenwert für einen zu starken Funksignalpegel (TH_HI+) wird,
und dass der untere Schwellenwert für einen optimalen Funksignalpegel (TH_LO_OPT) kleiner als der Schwellenwert für einen zu schwachen Funksignalpegel (TH_LO-) ist und der obere Schwellenwert für einen optimalen Funksignalpegel (TH_HI_OPT) größer als der Schwellenwert für einen zu starken Funksignalpegel (TH_HI+) ist.

9. Verfahren zum Bestimmen einer geeigneten Position nach Anspruch 8, **dadurch gekennzeichnet, dass** eine Differenz zwischen dem Schwellenwert für einen zu schwachen Funksignalpegel (TH_LO-) und dem Schwellenwert für einen optimalen Funksignalpegel (TH_LO_OPT, TH_LO_opt_ext) größer ist als eine Differenz zwischen dem oberen Schwellenwert für einen optimalen Funksignalpegel (TH_HI_OPT, TH_HI_OP_ext) und dem Schwellenwert für einen zu starken Funksignalpegel (TH_HI+).

10. Verfahren zum Bestimmen einer geeigneten Position nach einem der vorhergehenden Ansprüche, **dadurch gekennzeichnet, dass** es auch eine Ausgabe (E15) einer Anzahl von ersten Funkabdeckungserweiterungseinrichtungen umfasst, über die ein zwischen der zusätzlichen Funkabdeckungserweiterungseinrichtung und dem Heimgateway ausgetauschtes Funksignal verlaufen würde, wenn die zusätzliche Funkabdeckungserweiterungseinrichtung an der aktuellen Position des mobilen Endgeräts installiert würde.

11. Verfahren zum Bestimmen einer geeigneten Position nach einem der vorhergehenden Ansprüche,
**dadurch gekennzeichnet, dass** es auch eine Ausgabe (E11) einer Meldung umfasst, die eine Verbindung der zusätzlichen Funkabdeckungserweiterungseinrichtung mit dem lokalen Kommunikationsnetz gemäß einer drahtgebundenen Kommunikationstechnologie empfiehlt.

12. Computerprogrammprodukt, das Programmcodeanweisungen umfasst, die bei seiner Ausführung durch einen Prozessor das Verfahren zum Bestimmen einer optimalen Position nach einem der Ansprüche 1 bis 11 durchführen.

13. Vorrichtung (DISP) zum Verwalten der Installation einer zusätzlichen Funkabdeckungserweiterungseinrichtung (EXT2) in einem lokalen Kommunikationsnetzwerk, das ein Heimgateway (PAS) und mindestens eine erste Funkabdeckungserweiterungseinrichtung (EXT), die Zugangspunkte zu dem lokalen Netzwerk bilden, umfasst, **dadurch gekennzeichnet, dass** es mindestens einen Prozessor (PROC) umfasst, der zu Folgendem ausgelegt ist:
- Messen von Pegeln von Funksignalen, die zwischen dem mobilen Endgerät und den Zugangspunkten ausgetauscht werden, und Bestimmen einer Positionierungsangabe, die jeder Messung zugeordnet ist,
- wenn mindestens eine der Positionierungsangaben repräsentativ für eine optimale Positionierung ist und keine der anderen Positionierungsangaben repräsentativ für eine zu nahe Positionierung ist, Ausgeben einer Information, die angibt, dass die Position der Vorrichtung für die Installation der zusätzlichen Funkabdeckungserweiterungseinrichtung geeignet ist.

## Claims

1. Method for determining a suitable position for installing an additional radio coverage extension equipment (EXT2) in a local communication network comprising a home gateway (PAS) and at least one first radio coverage extension equipment (EXT) forming access points to said local network, said management method being implemented by a mobile terminal (T1),
the method being **characterized in that** it comprises:
- measuring levels of radio signals exchanged between the mobile terminal and said access points, and determining (E12) a positioning indication associated with each measurement,
- when at least one of the positioning indications is representative of an optimal positioning and none of the other positioning indications is representative of a positioning which is too close, rendering (E13) information indicating that the position of the mobile terminal is suitable for installing said additional radio coverage extension equipment.

2. Method for determining a suitable position according to Claim 1, wherein the positioning indication is representative of a positioning which is too far, too close or optimal with respect to the access point for positioning the additional coverage extension equipment.

3. Method for determining a suitable position according to one of the preceding claims, **characterized in that**, as long as said suitable installation position is not rendered, it renders said positioning indications associated with the level measurements.

4. Method for determining a suitable position according to one of the preceding claims, **characterized in that** said determining of an indication of positioning of said mobile terminal with respect to one of said access points comprises at least one measurement of an instantaneous level of radio signal exchanged between said mobile terminal and said access point.

5. Method for determining a suitable position according to the preceding claim, said mobile terminal communicating with said access points using Wi-Fi wireless communication technology, **characterized in that** said measuring of an instantaneous level of radio signal comprises said access point measuring the received power level of the Wi-Fi signal transmitted by said mobile terminal.

6. Method for determining a suitable position according to the preceding claim, **characterized in that** said determining of an indication of positioning of said mobile terminal with respect to one of said access points also comprises calculating an average value of measurements, by said access point, of the received power level of the Wi-Fi signal transmitted by said mobile terminal, over a time window of determined duration.

7. Method for determining a suitable position according to any one of Claims 4 to 6, **characterized in that** a change in value of said positioning indication occurs when said measured radio signal level crosses a determined radio signal level threshold.

8. Method for determining a suitable position according to Claim 7, **characterized in that** said positioning indication changes from a value of an indication of positioning which is optimal to a value of an indication of positioning which is too far or too close, respectively, when said measured radio signal level becomes lower than a low optimal radio signal level threshold (TH_LO_OPT) or higher than a high optimal radio signal level threshold (TH_HI_OPT), respectively,
**in that** said positioning indication changes from a value of an indication of positioning which is too far or too close, respectively, to a value of an indication of positioning which is optimal when said measured radio signal level becomes higher than a too low radio signal level threshold (TH_LO-) or lower than a too high radio signal level threshold (TH_HI+), respectively,
and **in that** said low optimal radio signal level threshold (TH_LO_OPT) is lower than said too low radio signal level threshold (TH_LO-) and said high optimal radio signal level threshold (TH_HI_OPT) is higher than said too high radio signal level threshold (TH_HI+).

9. Method for determining a suitable position according to Claim 8, **characterized in that** a difference between said too low radio signal level threshold (TH_LO-) and said low optimal radio signal level threshold (TH_LO_OPT, TH_LO_OPT_ext) is greater than a difference between said high optimal radio signal level threshold (TH_HI_OPT, TH_HI_OP_ext) and said too high radio signal level threshold (TH_HI+).

10. Method for determining a suitable position according to any one of the preceding claims, **characterized in that** it also comprises rendering (E15) a number of first radio coverage extension equipments through which a radio signal exchanged between said additional radio coverage extension equipment and said home gateway would pass, if said additional radio coverage extension equipment was installed at said current position of said mobile terminal.

11. Method for determining a suitable position according to any one of the preceding claims,
**characterized in that** it also comprises rendering (E11) a message recommending connecting said additional radio coverage extension equipment to said local communication network using wired communication technology.

12. Computer program product comprising program code instructions for implementing a method for determining an optimal position according to any one of Claims 1 to 11 when it is executed by a processor.

13. Device (DISP) for managing installing an additional radio coverage extension equipment (EXT2) in a local communication network comprising a home gateway (PAS) and at least one first radio coverage extension equipment (EXT) forming access points to said local network, **characterized in that** it comprises at least one processor (PROC) configured to:
- measure levels of radio signals exchanged between the mobile terminal and the access points, and determine a positioning indication associated with each measurement,
- when at least one of the positioning indications is representative of an optimal positioning and none of the other positioning indications is representative of a positioning which is too close, render information indicating that the position of the device is suitable for installing said additional radio coverage extension equipment.
